# EUROPÄISCHE PATENTSCHRIFT

(11) **EP 3 002 116 B1**
(45) Veröffentlichungstag und Bekanntmachung des Hinweises auf die Patenterteilung: **18.04.2018**
(21) Anmeldenummer: 15179636.4
(22) Anmeldetag: 04.08.2015
(51) Int. Cl.: B29D 30/42, B29C 65/78, B29C 65/00, B65H 21/00

(54) **SPLEISSVORRICHTUNG ZUM STUMPFSPLEISSEN EINES KLEBRIGN BANDES**
SPLICING DEVICE FOR BLUNT SPLICING OF AN ADHESIVE STRIP
DISPOSITIF DE SOUDAGE DESTINE AU SOUDAGE BOUT A BOUT D'UNE BANDE COLLANTE

(30) Priorität: 01.10.2014 DE 202014104734 U
(43) Veröffentlichungstag der Anmeldung: 06.04.2016
(73) Patentinhaber: Karl Eugen Fischer GmbH, 96224 Burgkunstadt (DE)
(72) Erfinder: KLENNER, Ralf, 96272 Hochstadt (DE)
(74) Vertreter: Lindner Blaumeier Patent- und Rechtsanwälte

(56) Entgegenhaltungen:
- EP-A1- 1 358 999
- EP-A1- 1 658 952
- WO-A1-2007/007405
- DE-A1- 2 444 370

## Beschreibung

Die Erfindung betrifft eine Spleißvorrichtung zum Stumpfspleißen eines klebrigen Bandes, insbesondere eines Stahl- oder Textilcordbandes, mit zwei Spleißbalkenpaaren bestehend jeweils aus einem oberen Spleißbalken und einem unteren Spleißbalken, an denen jeweils Spleißleisten in Form von Zahnleisten angeordnet sind, wobei die oberen Spleißbalken über eine erste Antriebseinrichtung vertikal relativ zu den unteren Spleißbalken aus einer angehobenen Nichtarbeitsstellung in eine abgesenkte Spleißstellung bewegbar sind, und wobei ein Spleißbalkenpaar in der Spleißstellung über eine zweite Antriebseinrichtung horizontal relativ zum anderen Spleißbalkenpaar bei gleichzeitigem Eingriff der einander zugewandten Zahnleisten bewegbar ist.

Eine solche Spleißvorrichtung wird beispielsweise in der Reifenindustrie verwendet. Sie dient dazu, Abschnitte eines klebrigen Bandes miteinander stumpf zu verbinden, um auf diese Weise ein Endlosband aus Cordmaterial herzustellen, wie es beispielsweise für die Herstellung einer Karkasse benötigt wird.

Die Spleißeinrichtung besteht aus einer Materialfördereinrichtung, mit der das klebrige Band an- und abtransportiert wird. Zum Verspleißen, also zum Verbinden, dient die eigentliche Spleißeinheit bestehend aus zwei Spleißbalkenpaaren, jeweils umfassend einen oberen und einen unteren Spleißbalken. Die Spleißeinheit ist an einem entsprechenden Rahmen der Spleißvorrichtung aufgebaut, bezüglich dem sie auch verschwenkt werden kann, um unterschiedliche Spleißwinkel zu realisieren.

Die zuvor geschnittenen Bandabschnitte werden mittels der Materialfördereinrichtung an die Spleißlinie der Spleißvorrichtung transportiert und mit der Bandkante an einer imaginären Spleißlinie positioniert. Sodann werden die oberen Spleißbalken nach unten bewegt, bis das Bandmaterial zwischen den Zahnleisten der oberen und unteren Spleißbalken geklemmt ist. Dann verfährt ein Spleißbalkenpaar ein kurzes Stück in Richtung des anderen Spleißbalkenpaares, wobei das geklemmte Band mitgenommen wird. Hierbei greifen die auf Lücke zueinander angeordneten Zahnleisten ineinander, so dass sich quasi ein geschlossener Spleißraum ergibt. Während dieser Horizontalbewegung werden die Kanten der zu verbindenden Bandabschnitte aneinandergelegt, worüber die eigentliche Spleißverbindung erfolgt. Üblicherweise erfolgt die Horizontalbewegung entgegen der Materialförderrichtung.

Zur Ermöglichung der Vertikalbewegung der oberen Spleißbalken sind entsprechende Gewindespindeln mit zugeordneten Antriebsmotoren vorgesehen. Über diese können die oberen Spleißbalken auf eine definierte Absenkposition bewegt werden, in der die Bandabschnitte zwischen den Zahnleisten verklemmt werden. Da einerseits das Band nicht immer absolut homogen in der Dicke ist, und da andererseits über die Antriebsmotoren nicht immer haargenau exakt die gleiche Absenkposition angefahren werden kann, kann es vorkommen, dass der Klemmdruck, den die Zahnleisten auf das Bandmaterial ausüben, variiert, was zu unterschiedlichen Qualitäten der Spleißverbindung führt.

Aus EP 1 658 952 A1 ist eine Spleißvorrichtung zum stumpfen Verspleißen zweier Bandabschnitte, insbesondere von Cordbandabschnitten zur Reifenherstellung, mit zwei gegeneinander verschiebbaren Spleißleistenpaaren, deren übereinanderliegende Einzelspleißleisten zwischen einer oberen Freigabestellung und einer unteren Einklemmstellung für die Ränder der Bandabschnitte verfahrbar sind, bekannt. Die Spleißleisten sind Zahnleisten, wobei sowohl die Zähne der beiden oberen als auch die der beiden unteren Zahnleisten gegeneinander gestellt und auf Lücke versetzt angeordnet sind, und wobei die Zähne der übereinanderliegenden Zahnleisten auf Lücke versetzt angeordnet sind, wobei die Zahnleisten jeweils auf der Klemmseite mit hinter den Zähnen angeordneten erhöhten Klemmrippen versehen sind. Eine vergleichbare Spleißvorrichtung ist aus EP 1 358 999 A1 bekannt.

DE 24 44 370 offenbart eine Vorrichtung zum Verbinden von parallelogrammförmigen Gummistücken, beispielsweise durch Verschweißen oder Verkleben ohne Überlappung. Die Gummistücke werden im Rahmen der Reifenherstellung verwendet. Zum Verbinden zweier Gummistücke, die auf zwei separaten Tischen liegen, wird ein Tisch in Richtung des anderen bewegt, bis die Kanten der beiden Tische gegeneinander stoßen, wobei hierbei auch die beiden geklemmten Gummistücke stumpf miteinander verbunden werden.

Der Erfindung liegt damit das Problem zugrunde, eine Spleißvorrichtung anzugeben, die im Hinblick auf die Bewegung der oberen Spleißbalken und damit die Einstellung eines stets gleichbleibenden Spleißdrucks verbessert ist.

Zur Lösung dieses Problems ist bei einer Spleißvorrichtung der eingangs genannten Art erfindungsgemäß vorgesehen, dass die erste Antriebseinrichtung pro Spleißbalkenpaar zwei Gewindespindeltriebe mit zugeordneten Servomotoren umfasst, wobei jeder Gewindespindeltrieb eine über den Servomotor angetriebene Gewindespindel, die am unteren Spleißbalken drehgelagert ist, und eine auf der Gewindespindel laufende und mit dem oberen Spleißbalken gekoppelte Gewindemutter umfasst, wobei zwischen der Gewindemutter und dem Spleißbalken eine den auf das in der Spleißstellung zwischen den oberen und unteren Spleißbalken geklemmte Band wirkenden Spleißdruck begrenzende Kolben-Zylinder-Einheit vorgesehen ist.

Bei der erfindungsgemäßen Spleißvorrichtung wird die Vertikalbewegung jedes oberen Spleißbalkens ebenfalls über einen Gewindespindeltrieb realisiert, jedoch in Verbindung mit einem Servomotor. Mit einem Servomotor ist eine hochpräzise Ansteuerung respektive ein hochpräziser Antrieb des Gewindespindeltriebs möglich, so dass eine äußerst präzise Balkenpositionierung und dabei ein äußerst präzises Anfahren einer definierten Spleißposition möglich ist.

Darüber hinaus ist zwischen der Gewindemutter des Gewindespindeltriebs und dem oberen Spleißbalken selbst eine Kolben-Zylinder-Einheit vorgesehen, die als Druckbegrenzungseinheit fungiert. Über diese Kolben-Zylinder-Einheit wird sichergestellt, dass der Spleißbalken stets mit dem gleichen, durch entsprechende Einstellung der Kolben-Zylinder-Einheit definierten Druck auf das Bandmaterial aufsetzt respektive drückt, so dass unabhängig von der konkreten Ist-Dicke des Bandes stets mit demselben Spleißdruck gearbeitet wird.

Mit der erfindungsgemäßen Spleißvorrichtung ist es folglich zum einen möglich, aufgrund der verwendeten Servomotoren als Gewindespindelantrieb hochpräzise Stellen und Positionieren zu können. Darüber hinaus ist durch Integration der Kolben-Zylinder-Einheit an der angegebenen Position sichergestellt, dass ein definierter Spleißdruck erreicht wird respektive in keinem Fall mit einem höheren als dem definierten, maximalen Spleißdruck gearbeitet werden kann.

Die Gewindemutter, die dem oberen Spleißbalken zugeordnet ist, ist gemäß einer zweckmäßigen Weiterbildung der Erfindung mit einer Adapterplatte verbunden, die mit dem Zylinder der Kolben-Zylinder-Einheit verbunden ist, während der Spleißbalken mit dem Kolben der Kolben-Zylinder-Einheit verbunden ist. Es ist folglich eine Kopplung zwischen Antrieb und Spleißbalken über die Kolben-Zylinder-Einheit realisiert, wobei die Kolben-Zylinder-Einheit das Druck definierende System ist.

Die Kolben-Zylinder-Einheit weist hierzu bevorzugt eine Ventileinrichtung auf, die bei Erreichen eines aus der Bandklemmung resultierenden Maximaldrucks öffent. Das heißt, dass der obere Spleißbalken definiert abgesenkt wird, respektive eine definierte, über den Servomotor angesteuerte Position angefahren wird. In dieser drückt der Spleißbalken respektive seine Zahnleiste auf das Bandmaterial. Mit dem Absenken auf das Bandmaterial steigt zwangsläufig der Druck in der Kolben-Zylinder-Einheit, wobei bei Erreichen eines über die Kolben-Zylinder-Einheit definierten Maximaldrucks die Ventileinrichtung öffnet, so dass jedwede infinitesimale weitere Bewegung des Servomotors respektive des Gewindespindeltriebs nicht in einer weiteren Absenkung und einer weiteren Druckerhöhung resultiert.

Der jeweilige Servomotor ist bevorzugt am unteren Spleißbalken in axialer Verlängerung der Gewindespindel angeordnet, die ihrerseits am Spleißbalken drehgelagert sein kann. Es ergibt sich also quasi ein axialer Aufbau.

In Weiterbildung der Erfindung kann an einem Spleißbalken jedes Spleißbalkenpaares eine über einen Antriebsmotor, insbesondere einen Servoantrieb vertikal in Richtung des anderen Spleißbalkens des jeweiligen Spleißbalkenpaares verstellbare Anschlagstange für den anderen Spleißbalken vorgesehen sein. Diese Anschlagstange ist quasi das mechanische Notstoppelement, das im Notfall verhindert, dass, sollte aus welchem Grund auch immer die Kolben-Zylinder-Einheit nicht arbeiten oder der Servomotor nicht rechtzeitig abschalten, der obere Spleißbalken über eine über die Anschlagstange definierte unterste Absenkposition hinaus bewegt wird. Dabei kann die Stange am unteren Balken angeordnet sein, und der obere Spleißbalken läuft dagegen, oder die Stange ist am oberen Spleißbalken angeordnet und läuft selbst gegen den unteren Spleißbalken.

Die Anschlagstangen sind bevorzugt an einem Ende der Spleißbalken vorgesehen. Am einen Spleißbalkenende ist eine imaginäre Bezugslinie, bezüglich welcher das zu spleißende Band grundsätzlich seitlich positioniert ist. Das heißt, dass das Band mit einer Bandkante immer in Bezug auf diese Bezugslinie positioniert ist. Ist das Band relativ schmal, so könnte es, da die Spleißbalken relativ breit sind, beim Auflegen auf das Band zu einer minimalen Verkippung des oberen Spleißbalkens kommen. Aus diesem Grund ist die Anschlagstange bevorzugt am gegenüberliegenden Balkenende angeordnet, so dass eine solche Verkippung ausgeschlossen ist.

Der obere Spleißbalken jedes Spleißbalkenpaares ist in Weiterbildung der Erfindung bevorzugt über eine Stangenführung, umfassend eine am einen Spleißbalken vorgesehene Stange, die in eine am anderen Spleißbalken vorgesehene Führungsbohrung greift, vertikal relativ zum unteren Spleißbalken geführt. Bevorzugt ist die Führungsstange am unteren Spleißbalken angeordnet und durchgreift eine Bohrung am oberen Spleißbalken, wobei grundsätzlich aber auch eine umgekehrte Anordnung denkbar wäre.

Wie beschrieben wird zur Erwirkung des Stumpfspleißes ein Spleißbalkenpaar horizontal gegen das andere bewegt. Um dies zu ermöglichen ist zweckmäßigerweise der untere Spleißbalken des horizontal bewegbaren Spleißbalkenpaares über wenigstens zwei Linearführungen an einem Vorrichtungsgestell, insbesondere an einer Grundplatte des Vorrichtungsgestells geführt. Über diese zwei Linearführungen ist eine sichere Horizontalführung des Balkenpaares, das für den Spleißvorgang nur um wenige Zentimeter bewegt wird, sichergestellt. Gekoppelt sind der untere und der obere Spleißbalken über die zuvor beschriebene vertikale Stangenführung, sofern eine solche vorgesehen ist, oder über entsprechende Koppelelemente.

Die zweite Antriebseinrichtung, die die Horizontalbewegung erwirkt, umfasst in Weiterbildung der Erfindung bevorzugt zwei die beiden unteren Spleißbalken verbindende Gewindespindeltriebe, umfassend eine Gewindespindel und eine Gewindemutter, mit zugeordneter Antriebsvorrichtung. Auch hier kommen also Gewindespindeltriebe zum Einsatz, über die eine entsprechende Balkenbewegung realisiert wird.

Dabei kann nach einer ersten Erfindungsausgestaltung die jeweilige Gewindespindel an dem horizontal zu bewegenden unteren Spleißbalken befestigt sein und sich zum anderen positionsfesten unteren Spleißbalken erstrecken, an dem die jeweilige auf der Gewindespindel laufende Gewindemutter drehgelagert ist, die über die Antriebsvorrichtung angetrieben wird. Gemäß dieser Erfindungsausgestaltung ist also die Gewindespindel am zu bewegenden Spleißbalken positionsfest angeordnet, sie dreht sich nicht. Angetrieben wird die am positionsfesten Balken drehgelagerte Gewindemutter. Dreht sich diese Gewindemutter so schraubt sich die Gewindespindel ein und aus, je nach Drehrichtung der Gewindemutter. Dementsprechend wird über die Linearführungen der jeweilige untere Spleißbalken und über ihn das gesamte Spleißbalkenpaar bewegt.

Alternativ zu dieser Ausgestaltung ist es denkbar, dass die jeweilige Gewindespindel am positionsfesten unteren Spleißbalken drehgelagert ist und sich zum anderen, horizontal zu bewegenden Spleißbalken erstreckt, an dem die jeweilige, auf der Gewindespindel laufende Gewindemutter befestigt ist, wobei die Gewindespindel über die Antriebsvorrichtung angetrieben wird. Bei dieser Erfindungsausgestaltung wird die jeweilige Gewindespindel aktiv gedreht. Sie ist am positionsfesten Spleißbalken drehgelagert, jedoch axial nicht beweglich. Die Spindeldrehung führt dazu, dass die Spindelmutter und mit ihr der untere Spleißbalken auf der Gewindespindel axial wandert, worüber die entsprechende Balkenpaarverstellung erreicht wird.

Unabhängig davon, ob nun die Gewindemuttern oder die Gewindespindeln gedreht werden, sieht eine zweckmäßige Weiterbildung der Erfindung vor, dass die Antriebsvorrichtung einen umlaufenden Zahnriemen, der die angetriebenen Gewindemuttern oder die angetriebenen Gewindespindeln umschlingt, und der über einen Antriebsmotor mit zugeordnetem Antriebszahnrad angetrieben wird, umfasst. Wie beschrieben befinden sich die angetriebenen Gewindemuttern oder Gewindespindeln unmittelbar am unteren positionsfesten Spleißbalken. Das Zugmittel, also der Zahnriemen, umschlingt die Gewindemuttern respektive Gewindespindeln. Er wird selbst über einen integrierten Antriebsmotor mit Antriebszahnrad angetrieben. Diese Antriebskonfiguration kann ohne weiteres unterhalb des unteren, positionsfesten Spleißbalkens aufgebaut werden, so dass sich insgesamt eine sehr kompakte Antriebseinheit auch in diesem Bereich ergibt.

Weiterhin kann erfindungsgemäß am, in Bandförderrichtung gesehen hinteren, oberen Spleißbalken ein oder mehrere längs des Spleißbalkens laufenden Niederhaltern, die über ein oder mehrere Stellelemente vertikal bewegbar sind, an einem horizontal verschiebbar gelagerten Träger vorgesehen sein, wobei am unteren Spleißbalken ein das Ende des bereits gespleißten Bandes tragendes, horizontal verschiebbares Auflageblech vorgesehen ist, das mit dem Träger über eine Verbindungseinrichtung, die eine Vertikalbewegung des oberen Spleißbalkens erlaubt, verbunden ist, wobei das Auflageblech mit einem eine Horizontalverschiebung erwirkenden Stellelement gekoppelt ist. Diese Niederhaltereinrichtung in Verbindung mit dem Auflageblech ermöglicht eine seitliche Ausrichtung der hinteren, nachlaufenden Kante des bereits gespleißten Bandes, sollte der angeforderte Cordbandstreifen einen leichten Querversatz relativ zum gespleißten Bandende haben. Die mehreren Niederhalter können über den Träger vertikal auf- und abbewegt werden. Hierüber können die Niederhalter an der Bandoberseite angreifen und das Band leicht gegen das Auflageblech drücken. Wird nun über geeignete Sensoren ein Querversatz festgestellt, so kann durch Verschieben des Auflageblechs ein Querversatzausgleich erfolgen. Hierzu ist das Auflageblech mit einem entsprechenden Stellelement, beispielsweise einem elektrischen Stellantrieb, verbunden. Das Auflageblech ist über eine entsprechende Verbindungseinrichtung mit dem Niederhalterträger verbunden, so dass zwangsläufig auch die Niederhalter querverschoben werden. Mithin kann auf einfache Weise eine Querausrichtung in Abhängigkeit eines über Sensoren erfassten Seitenversatzes erfolgen.

Diese Verbindungseinrichtung, die natürlich auch eine Vertikalbewegung des oberen Spleißbalkens mit dem Träger und dem Niederhalter relativ zum unteren Spleißbalken mit dem Auflageblech ermöglichen muss, ist bevorzugt mittels einer am Auflageblech befestigten Stange, die in einer am Träger vorgesehenen Stangenführung geführt ist, realisiert.

Schließlich kann an jedem Spleißbalken eine über ein oder mehrere Stellelemente vertikal bewegbare Abstreiferleiste vorgesehen sein, mit der nach dem Spleißen während des Hochfahrens der oberen Spleißbalken das am jeweiligen Spleißbalken gegebenenfalls anhaftende gespleißte Band abstreifbar ist. Wie beschrieben ist das Band klebrig, so dass es an den Zahnleisten anhaften kann. Um zu vermeiden, dass das Band zu weit mit angehoben wird, werden die entsprechenden Abstreiferleisten vertikal bewegt, so dass das Band von den Zahnleisten abgedrückt werden kann.

Weitere Vorteile, Merkmale und Einzelheiten der Erfindung ergeben sich aus den im Folgenden beschriebenen Ausführungsbeispielen sowie anhand der Zeichnungen. Dabei zeigen:
- Figur 1: eine Prinzipdarstellung einer erfindungsgemäßen Schneideinrichtung in einer Seitenansicht,
- Figur 2: eine Aufsicht auf die Schneidvorrichtung aus Figur 1,
- Figur 3 und 4: zwei Prinzipdarstellungen betreffend die Verschwenkbarkeit der Schneidvorrichtung,
- Figur 5: eine Schnittansicht entlang der Linie V-V in Figur 1,
- Figur 6: eine Schnittansicht entlang der Linie VI-VI in Figur 1,
- Figur 7: eine Schnittansicht entlang der Linie VII-VII in Figur 1,
- Figur 8: eine vergrößerte Seitenansicht der Spleißbalkenpaare mit zugeordnetem Niederhalter,
- Figur 9: eine Seitenansicht entsprechend Figur 8 unter Darstellung der Horizontalverschiebeeinrichtung,
- Figur 10: eine Seitenansicht der Spleißbalkenpaare, wobei ein Spleißbalkenpaar in der abgesenkten Stellung (links) und das andere Spleißbalkenpaar in der angehobenen Stellung (rechts) dargestellt ist,
- Figuren 11 - 13: drei Darstellung zur Erläuterung des Stumpfspleißvorgangs,
- Figur 14: eine schematische Aufsicht auf eine Karkassenanlage enthaltend eine erfindungsgemäß Schneidvorrichtung zum Schneiden von Cordmaterial, und
- Figur 15: eine Aufsicht auf eine Karkassenanlage umfassend eine erfindungsgemäße Schneidvorrichtung sowie einen Slitter zum Schneiden von Cordmaterial.

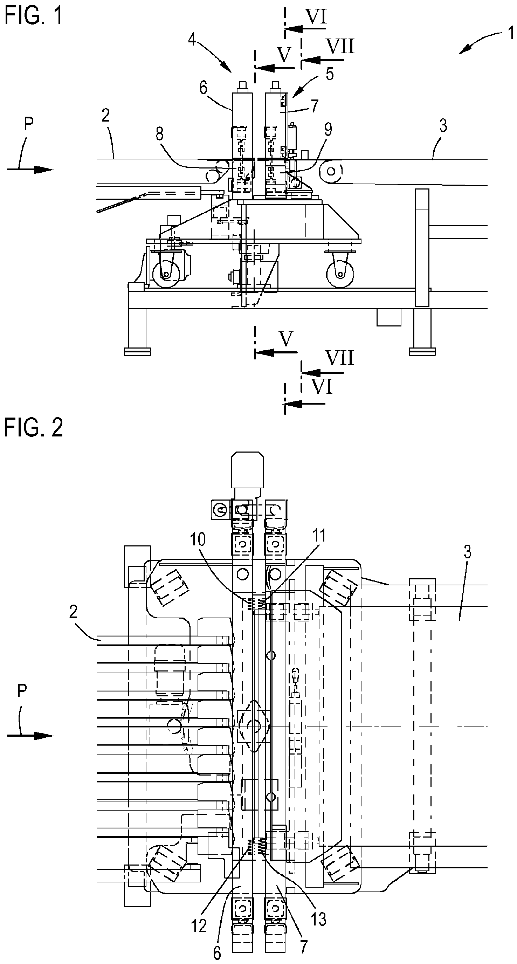

Figur 1 zeigt eine erfindungsgemäße Spleißvorrichtung 1 zum stumpfen Spleißen eines klebrigen Bandes, das der Spleißvorrichtung 1 über vor- und nachgeschaltete Transporteinrichtungen 2, 3 zugeführt bzw. von ihr abtransportiert wird. Die Spleißvorrichtung umfasst zwei Spleißbalkenpaare 4, 5, jeweils umfassend einen oberen Spleißbalken 6, 7 sowie einen unteren Spleißbalken 8, 9. Die beiden unteren Spleißbalken 8, 9 sind vertikal positionsfest, während die oberen Spleißbalken 6, 7, wie nachfolgend noch beschrieben wird, vertikal bewegbar sind. Darüber hinaus ist das hintere Spleißbalkenpaar 5 auch entgegen der durch den Pfeil P dargestellten Materialtransportrichtung in Richtung des vorderen Spleißbalkenpaares 4 beweglich, um den eigentlichen Spleiß vorzunehmen.

Zum Verspleißen weisen sowohl die oberen Spleißbalken 6, 7 als auch die unteren Spleißbalken 8, 9 sich längs der Balken erstreckende Zahnleisten 10, 11 auf, die exemplarisch in Figur 2 gezeigt sind. Die Zahnleisten 10, 11 der beiden oberen Spleißbalken 6, 7 sowie die Zahnleisten 12, 13 der unteren Spleißbalken 8, 9 (die aus Gründen der Erläuterung in Figur 2 dargestellt sind, wenngleich sie unterhalb der Zahnleisten 10, 11 der oberen Spleißbalken 6, 7 liegen) sind jeweils auf Lücke zueinander positioniert, so dass im Rahmen der Horizontalbewegung der Zahnleisten 10, 11 sowie 12, 13 ineinander eingreifen können.

Der grundsätzliche Aufbau einer solchen Spleißvorrichtung ist bekannt und bedarf keiner weiteren Erläuterung.

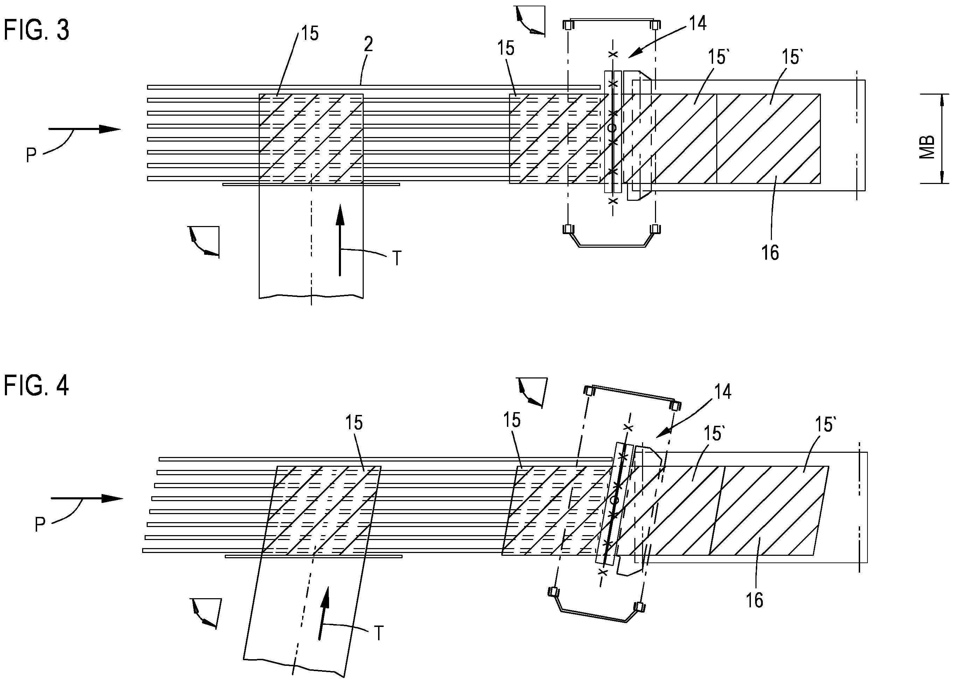

Figur 3 zeigt eine Prinzipdarstellung, wie die Spleißeinheit 14 umfassend die Spleißbalkenpaare 4, 5 zum Verspleißen von Bandabschnitten positioniert respektive verstellt werden kann. Auf der Transportvorrichtung 2 wird ein zuvor in einer Schneideinrichtung geschnittener Bandabschnitt 15 transportiert, wie durch den Transportpfeil T in Figur 3 dargestellt ist. Die Transporteinrichtung 2 bewegt diesen Bandabschnitt 15 nun zur Spleißvorrichtung 1 respektive zur Spleißeinheit 14, in der zuvor mehrere Bandabschnitte 15' zur Bildung eines Endlosbandes 16 verbunden wurden. In Figur 3 befindet sich ein Bandabschnitt 15 in seiner Spleißposition relativ zum zuletzt angespleißten Bandabschnitt 15' des Bandes 16.

Die Bandabschnitte 15 und 15' werden im Bereich ihrer jeweiligen einander gegenüberliegenden Enden Stumpf miteinander verspleißt. Diese Kanten können in einem 90°-Winkel zueinander stehen, wie die Ausgestaltung gemäß Figur 3 zeigt.

Gemäß Figur 4, die eine vergleichbare Situation zeigt, stehen jedoch die zu verspleißenden Kanten der Bandabschnitte 15 und 15' ganz offensichtlich unter einem Winkel zueinander, weshalb die Spleißeinheit 14 entsprechend verschwenkt wurde. Auch diese Funktion einer Spleißvorrichtung ist hinlänglich bekannt.

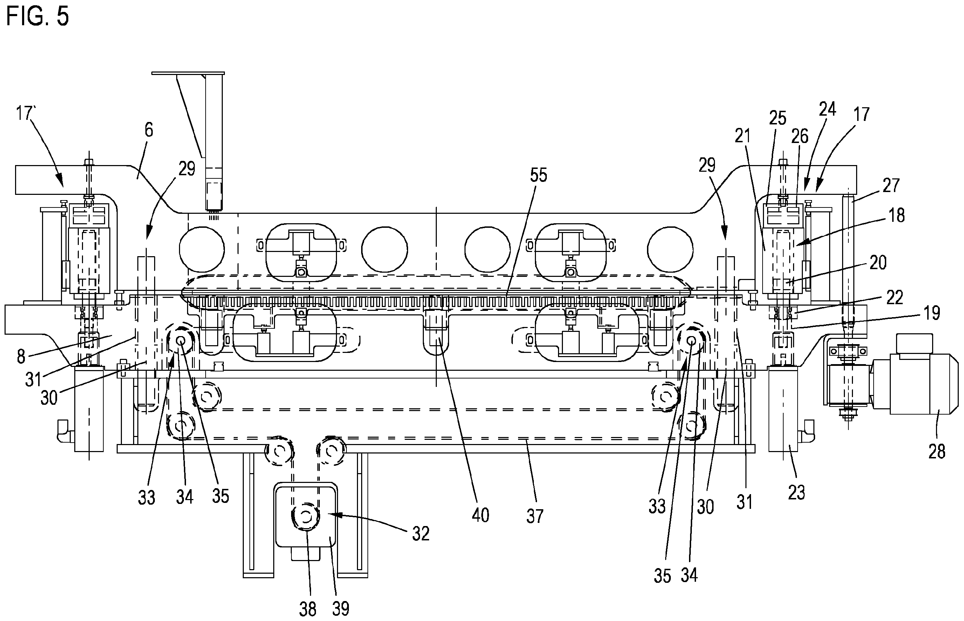

Figur 5 zeigt eine Teilansicht der Spleißvorrichtung 1 aus Figur 1 in Richtung der Linie V-V. Gezeigt sind die beiden Spleißbalken 6 und 7 des in Transportrichtung vorderen Spleißbalkenpaares 4. Wie beschrieben ist der obere Spleißbalken 6 (Gleiches gilt für den Spleißbalken 7) vertikal bewegbar, er kann also aus einer angehobenen Stellung in die eigentliche Spleißstellung gebracht werden. Hierzu sind die beiden Spleißbalken 6, 8 respektive 7, 9 über jeweils zwei Antriebsvorrichtungen 17, 17' miteinander verbunden. Die Antriebsvorrichtungen 17, 17' sind identisch ausgeführt, weshalb nachfolgend nur die Antriebsvorrichtung 17 näher beschrieben wird.

Die Antriebsvorrichtung 17 umfasst einen Gewindespindeltrieb 18, mit einer Gewindespindel 19, auf der eine Gewindemutter 20, die positionsfest am oberen Spleißbalken 6 angeordnet ist. Sie ist an einer Adapterplatte 21 vorgesehen. Die Gewindespindel kann gedreht werden, so dass bei einer Drehung der axial gesehenen positionsfesten Gewindespindel 19 die Gewindemutter 20 auf der Gewindespindel 19 läuft, woraus die Auf- und Abbewegung erwirkt wird.

Die Gewindespindel 19 ist in einer entsprechenden Lagereinrichtung 22 am unteren Spleißbalken 8 drehgelagert.

Der Spindelantrieb erfolgt jeweils über einen Servomotor 23, der exakt angesteuert werden kann und über den eine hochpräzise Vertikalbewegung und damit verbunden auch eine hochpräzise Positionierung möglich ist.

Die Adapterplatte 21 ist über eine Kolben-Zylinder-Einheit 24 mit dem oberen Spleißbalken 6 verbunden. Diese Kolben-Zylinder-Einheit dient der Begrenzung eines maximal möglichen, auf das Band wirkenden Spleißdrucks. Hierzu umfasst die Kolben-Zylinder-Einheit einen Zylinder 25, der mit der Adapterplatte 21 verbunden ist. Im Zylinder 25 ist der Kolben 26 aufgenommen, der mit dem oberen Spleißbalken 6 verbunden ist. Ferner umfasst die Kolben-Zylinder-Einheit eine Ventileinrichtung, die nicht näher gezeigt ist.

Die Funktionen der Kolben-Zylinder-Einheit 24 ist nun derart, dass mit Absenken des oberen Spleißbalkens und aufsetzen desselben auf dem Bandabschnitt der Druck in der Kolben-Zylinder-Einheit ansteigt, denn über den Servomotor 23 wird die Gewindespindel 19 nach wie vor etwas angetrieben, so dass letztlich die Gewindemutter 20 und mit ihr die Adapterplatte 21, an der der Zylinder 25 befestigt ist, nach wie vor axial gesehen nach unten belastet werden. Der Spleißbalken 6 liegt bereits am Bandabschnitt auf. Der Zylinder 25 wird mit zunehmenden Druck daher quasi vom Kolben 26 weggezogen, wodurch in der Kolben-Zylinder-Einheit 24 quasi ein Unterdruck entsteht. Es kommt zum Öffnen der Ventileinrichtung, wenn der Unterdruck groß genug ist. Eine weitere Spleißdruckerhöhung ist damit ausgeschlossen.

Hierdurch kann folglich ein maximal zulässiger Spleißdruck eingestellt werden. Die Kolben-Zylinder-Einheit 24 bildet also eine Art Druckkissen. Durch einen solchen Druckbegrenzer kann folglich stets mit dem gleichen Spleißdruck gespleißt werden, so dass etwaige Schwankungen in der Materialdicke nicht zu einer Veränderung des Spleißdrucks führen. Verbunden mit der hochpräzisen Positionierungsmöglichkeit über die Servomotoren 23 kann folglich ein sehr exakter und reproduzierbarer Spleiß erreicht werden.

Vorgesehen ist des Weiteren an einem Ende jedes unteren Spleißbalkens 8, 9 jeweils eine Anschlagstange 27, die über einen Antriebsmotor 28 vertikal verstellt werden kann. Sie dient als Endanschlag für den jeweils oberen Spleißbalken 6, 7. Weiter kann der Spleißbalken 6, 7 nicht abgesenkt werden. Über diese Anschlagstange 27 kann die Materialdicke definiert werden. Darüber hinaus wird hierdurch ein minimales Verkippen der oberen Spleißbalken 6, 7 verhindert. Das zu verspleißende Band liegt mit seiner Seitenkante stets im Bereich des Endes der oberen Spleißbalken 6, 7, das den Anschlagstangen 27 gegenüberliegt. Ist der Bandabschnitt relativ schmal, so liegt der Spleißbalken 6, 7 nur über eine kurze Länge auf. Im Übrigen liegt er frei. Um nun ein leichtes Verkippen des "freiliegenden" Balkenendes zu verhindern ist die entsprechende Anschlagstange 27 vorgesehen.

Darüber hinaus dient die jeweilige Anschlagstange 27 natürlich auch als Notstopp, sollte aus welchem Grund auch immer die Kolben-Zylinder-Einheit 24 versagen. Denn weiter als bis zum Anschlag an der Anschlagstange 27 kann der obere Spleißbalken nicht herabgesenkt werden.

Die oberen Spleißbalken 6, 7 sind über entsprechende Stangenführungen 29 an den unteren Spleißbalken 8, 9 geführt. Die Stangenführungen 29 umfassen jeweils eine Führungsstange 30, die im gezeigten Ausführungsbeispiel am oberen Spleißbalken 6 befestigt ist und in eine entsprechende Führungsbohrung 31 am unteren Spleißbalken greift.

Wie beschrieben ist das hintere Spleißbalkenpaar 5 relativ zum vorderen Spleißbalkenpaar 4 horizontal beweglich. Um diese Horizontalbewegung zu erwirken, ist eine zweite Antriebseinrichtung 32 vorgesehen. Diese umfasst wiederum zwei Gewindespindeltriebe 33, jeweils umfassend eine Gewindemutter 34, die am unteren Spleißbalken 9 angeordnet ist. Die Gewindespindel 35 ist im unteren Spleißbalken 8 drehgelagert und läuft in die Gewindemutter 34, die in einer entsprechenden Gewindebohrung 36 am zweiten unteren Spleißbalken 9 befestigt ist.

Die Gewindespindel 35 (respektive jeweils eine Zahnscheine) ist von einem Zahnriemen 37 umschlungen, der ebenfalls ein Antriebszahnrad 38, das über einen Antriebsmotor 39 angetrieben wird, umschlingt. Jede Bewegung des Zahnriemens 37 führt zu einer Rotation der Gewindespindel 35. Je nach Drehrichtung bewegt sich nun die Gewindespindel 35 in der Gewindemutter 34, so dass das hintere Spleißbalkenpaar 5 relativ zum vorderen Spleißbalkenpaar 4 verschoben wird.

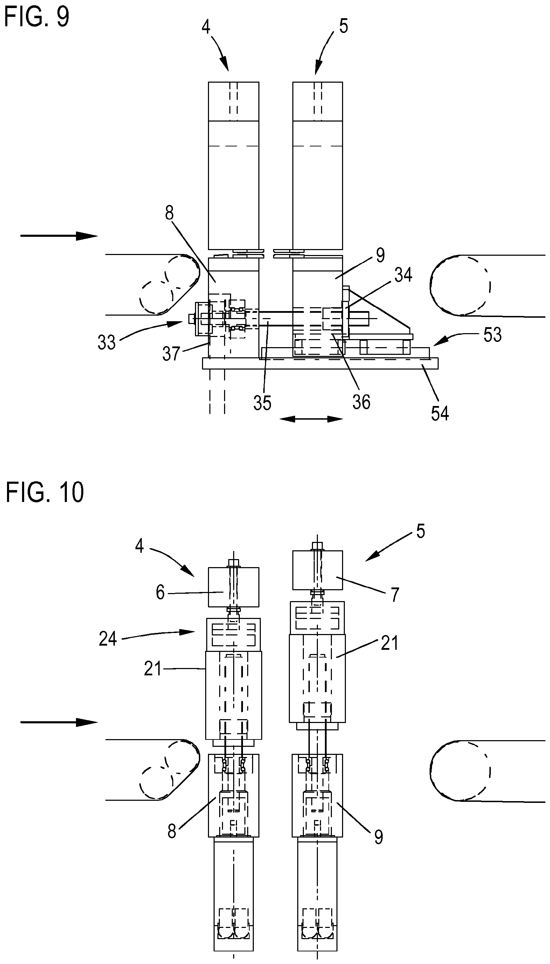

Hierzu ist das hintere Spleißbalkenpaar 5 über zwei Linearführungen 53 an einem Vorrichtungsgestell 54 horizontal verschiebbar gelagert, wie in Figur 9 gezeigt ist.

Figur 5 zeigt des Weiteren einen Kamm 55, der als Anschlag für den herangeförderten, neu zu verspleißenden Bandabschnitt 15 dient. Dieser ist über ein Stellelement 40 vertikal beweglich, so dass er in und aus der Transportebene bewegt werden kann.

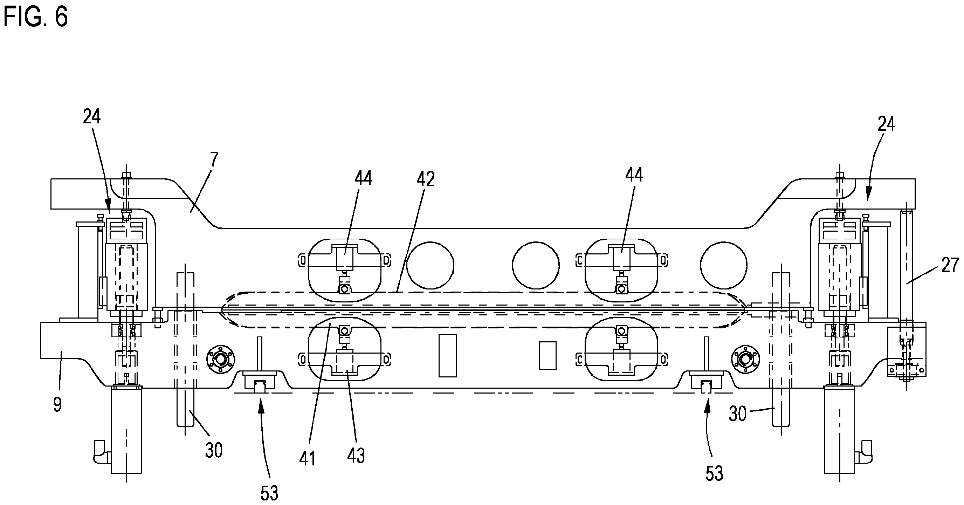

Jedem Spleißbalken 6, 7 respektive 8, 9 ist des Weiteren eine Abstreiferleiste 41, 42 (siehe Figur 6) zugeordnet, die über entsprechende Stellelemente 43, 44 vertikal bewegt werden kann. Über diese Abstreiferleisten 41, 42 wird nach dem eigentlichen Spleißen und dem Auseinanderfahren der Spleißbalken das daran möglicherweise klebende Bandmaterial abgestriffen.

Figur 6 zeigt ferner die horizontalen Linearführungen 53, wie zuvor beschrieben.

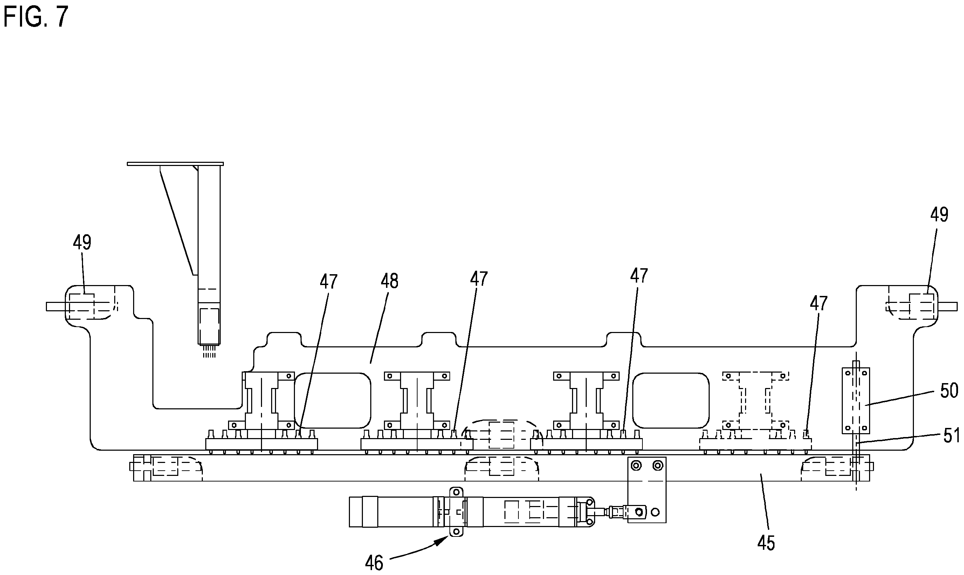

Figur 7 zeigt zum einen ein das Ende des gespleißten Bandes 16 tragendes Auflageblech 45, das horizontal verschiebbar am unteren Spleißbalken 9 angeordnet ist. Mit ihm verbunden ist ein Stellelement 46, üblicherweise ein Stellantrieb, mit dem das Auflageblech 45 vertikal zur Bandtransportrichtung positioniert werden kann.

Am oberen Spleißbalken 7 sind mehrere Niederhalter 47 an einem gemeinsamen Träger 48 angeordnet, der querverschiebbar am oberen Spleißbalken 7 angeordnet ist, wozu entsprechende Horizontalführung 49 vorgesehen sind.

Dieser Träger 48 ist mit dem Auflageblech 45 über eine Verbindungseinrichtung 50 umfassend eine Verbindungsstange 51, die trägerseitig sowie blechseitig angeordnet ist, verbunden.

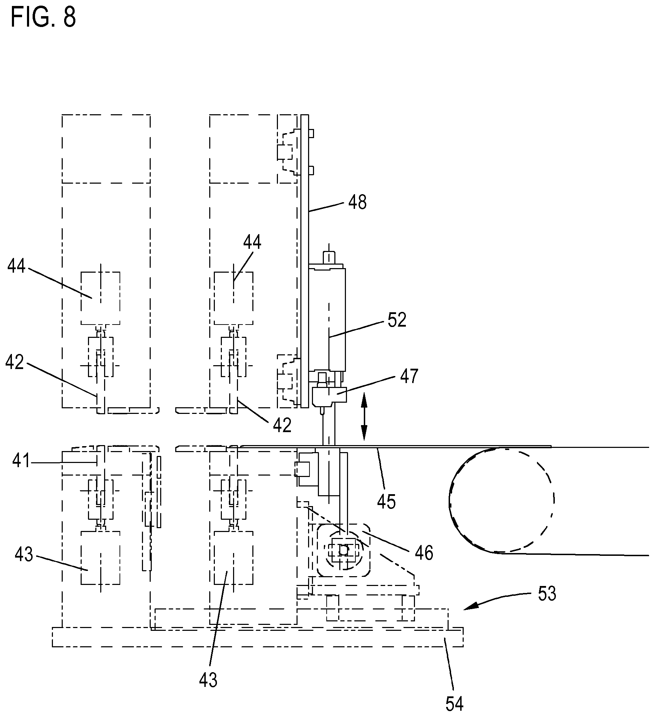

Wird nun über eine nicht näher gezeigte Sensorik ein etwaiger Querversatz der zu verspleißenden Bandkanten ermittelt, so kann durch Ansteuerung des Stellelements 46 ein solcher Querversatz ausgeglichen werden. Zu diesem Zweck werden zunächst die Niederhalter 47 mittels entsprechender Stellelemente 52 (siehe hierzu Figur 8) vertikal relativ zum Träger 48 bewegt, so dass sie leicht auf das auf dem Auflageblech 45 liegende Bandmaterial drücken. Wird nun ein Versatz festgestellt, so wird das Stellelement 46 entsprechend angesteuert, um das Auflageblech 45 und über die Verbindungseinrichtung 50 gekoppelt auch den Träger 48 quer zu verschieben, um den Versatz auszugleichen. Das Band wird zwangsläufig aufgrund der Klemmung über die Niederhalter 47 und das Auflageblech 45 mitgenommen.

Figur 10 zeigt in Form einer Prinzipdarstellung die unterschiedlichen Positionen, die ein oberer Spleißbalken einnehmen kann. Das links gezeigte Spleißbalkenpaar 4 befindet sich quasi in der Spleißstellung. Der obere Spleißbalken 6 ist abgesenkt, er liegt benachbart zum unteren Spleißbalken 8. Die jeweiligen Zahnleisten 10, 12 klemmen das dortige Band zwischen sich. Der Spleißdruck ist definiert, da die Kolben-Zylinder-Einheit 24 den Spleißdruck entsprechend begrenzt hat, was während der Absenkbewegung über die Gewindespindeltriebe 18 in Verbindung mit den Servomotoren 23 erreicht wird.

Demgegenüber befindet sich beim rechts gezeigten Spleißbalkenpaar 5 der obere Spleißbalken 7 in der angehobenen Stellung relativ zum positionsfesten unteren Spleißbalken 9. Zwangsläufig sind die Zahnleisten 11, 13 nicht gegeneinander zum Klemmen des Bandes verspannt.

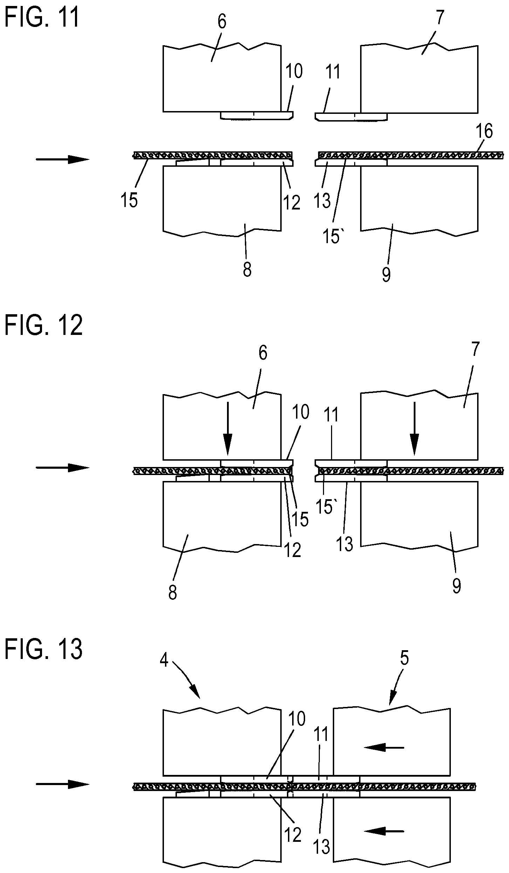

Die Figuren 11 - 13 zeigen den eigentlichen Spleißvorgang in Form dreier Prinzipdarstellungen.

Ausgehend von Figur 11 wird ein neuer Bandabschnitt 15 herangefördert und über den hier nicht gezeigten Kamm 55 positioniert. Nachfolgend kann ein gegebener Querversatz ausgeglichen werden. Die oberen Spleißbalken 6, 7 sind nach wie vor noch angehoben.

Nun werden, siehe Figur 12, die oberen Spleißbalken 6, 7 abgesenkt. Die oberen Zahnleisten 10, 11 drücken nun von oben auf den jeweiligen Bandabschnitt, der unterseitig über die Zahnleisten 12, 13 aufgelagert ist. In Figur 12 sind nun die oberen Spleißbalken 6, 7 in die Spleißstellung abgesenkt, die Bandabschnitte 15, 15' sind zwischen den Zahnleistenpaaren 10, 12 und 11, 13 geklemmt.

Nun werden, siehe Figur 13, die hinteren Spleißbalken 7, 9 respektive das hintere Spleißbalkenpaar 5 relativ zum vorderen Spleißbalkenpaar 4 über die zweite Antriebseinrichtung bewegt. Die sich zu ihrem freien Ende hin verjüngenden trapezförmigen Zähne der Zahnleisten 10 und 11 respektive 12 und 13 greifen ineinander, so dass sich quasi ein geschlossener Hohlraum ergibt. Die zu verspleißenden Bandkanten werden stumpf aneinander gelegt und aneinander gepresst. Es kommt aufgrund der Klebrigkeit und dem Spleißdruck zu einem Materialfluss respektive zu einer festen Materialverbindung.

Nach Herstellung des Spleißes werden die oberen Spleißbalken 6, 7 wieder angehoben, so dass der Druck auf das Bandmaterial reduziert wird. Zeitgleich fahren die Abstreiferleisten 41, 42 aus, um das Bandmaterial von dem jeweiligen Spleißbalken respektive Zahnleisten zu lösen. So dann fährt das Spleißbalkenpaar 5 wieder zurück in die Ausgangsstellung, entfernt zum Spleißbalkenpaar 4. Ein neuer Spleißzyklus kann beginnen, wozu zunächst das gespleißte Band abtransportiert und ein neuer Bandabschnitt herantransportiert wird.

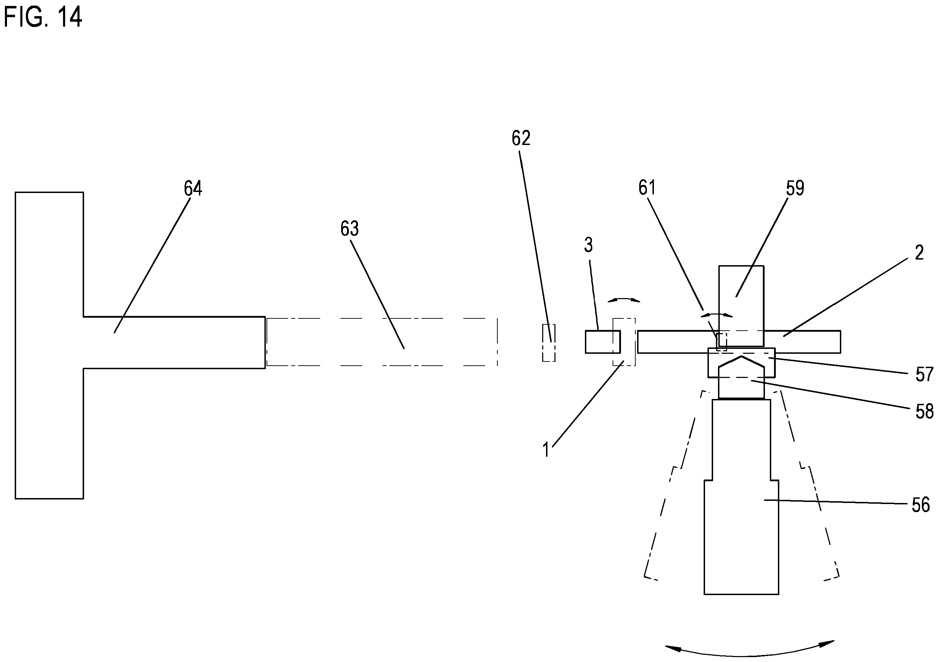

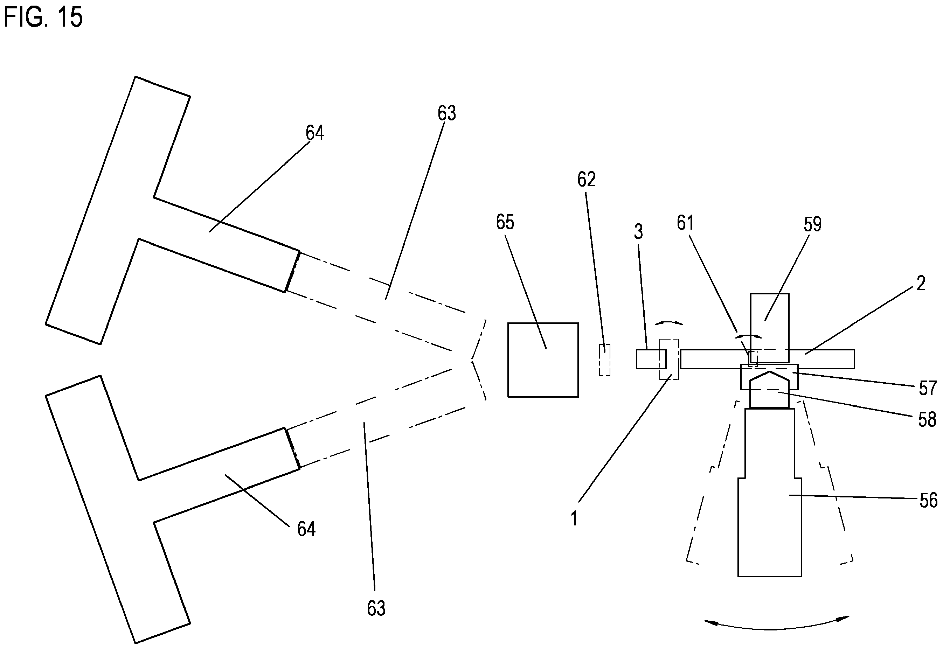

Die Figuren 14 und 15 zeigen verschiedene Layouts für Gesamtanlagen, jeweils umfassend eine erfindungsgemäße Spleißvorrichtung. Gleiche Anlagenkomponenten sind auch hier mit gleichen Bezugszeichen versehen. Die Ausführungen zu den Funktionen der einzelnen Anlagenkomponenten gelten, wenngleich detailliert nur zu einer Figur gegeben, auch für alle anderen in den Figuren beschriebenen Layoutbeispiele.

Fig. 14 zeigt ein beispielhaftes Layout für eine Karkassenanlage ohne Slitter.

Vorgesehen ist eine Abwickelstation 56, aus der das zu bearbeitende Cordband bezogen wird. In der Abwickelstation werden in ein geeignetes Gestell die zu verarbeitenden Materialrollen eingehängt und ausgewickelt. Hierbei wird die zu verarbeitende gummierte Cordbahn von einer Zwischenlage (Folie, Leinen oder Ähnliches) getrennt. Diese Zwischenlage wird verwendet, um das Verkleben der gummierten Materialbahn zu verhindern. Um verschiedene Schneidwinkel zu realisieren, kann wie ausgeführt der Abwickler 56 geschwenkt werden, was jedoch nicht zwingend erforderlich ist. Es gibt unterschiedliche Ausführungsformen hinsichtlich eines solchen Abwicklers. Bekannt sind Einfachabwickler, in die eine Materialrolle eingehängt werden kann. Bei einem Doppelabwickler mit Drehtisch sind zwei Materialrollen zum Einhängen, eine davon wird verarbeitet, eine davon gewechselt. Daneben ist ein Doppelabwickler mit Shuttlerrahmen zum Einhängen von zwei Materialrollen bekannt, eine wird verarbeitet, eine davon gewechselt. Weiterhin sind Kassettenabwickler bekannt, in denen eine Materialrolle in eine Kassette gehängt wird und die Kassette sodann in den Abwickler transportiert wird. Diese Aufzählung ist nicht abschließend. Der Abwickler ist verschwenkbar.

Der Abwickelstation 56 folgt eine Schneidvorrichtung 57, die zum Schneiden des von der Abwickelstation kommenden Cordbands dient. Die Schneidvorrichtung 57 dient zum Abschneiden von Cordbandstreifen in einer definierten Breite und einem definierten Winkel. Als Schere werden verschiedene Typen verwendet:
- Guillotine Scheren mit feststehendem Untermesser und auf und abfahrbarbarem Obermesser,
- Rundmesserscheren mit einem feststehenden Untermesser und einen daran entlang fahrendem Rundmesser,
- Scheren mit einem schnell rotierenden Sägemesser (ähnlich einem Kreissägenmesser).

Je nach zu verarbeitenden Material der Kunden kommen verschiedene Scherenausführungen zum Einsatz. Hierbei ist entscheidend, welches Cordmaterial (ob Textil- oder Stahlcord) und in welchem Winkel dieses geschnitten werden muß (Anlagentypen Karkasse bzw. Gürtel), wobei in diesem Beispiel eine Schere für eine Karkassenanlage verwendet wird.

Der Tisch der Schneidvorrichtung dient als Materialunterstützung 58 und ist mit der Abwickelstation 56 verbunden und schwenkt im Bedarfsfall gemeinsam mit dieser. Das zu verarbeitende Material liegt auf dem Scherentisch und wird auf diesem liegend in die Schneidvorrichtung 57 gezogen. Am Anfang des Tisches oder darüber befindet sich sehr häufig eine Fördereinrichtung, die den Materialanfang in die Schere transportiert, z. B. eine angetriebene Förderrolle. Dies ist immer dann notwendig, wenn die Maschine komplett entleert ist und der Anfang einer neuen Materialrolle in die Schneidvorrichtung 57 eingelegt werden muss, oder falls zum Schwenken des Abwicklers das Material ein Stück weit aus der Schneidvorrichtung 57 zurückgezogen wurde.

Relevant für die Scherenbauform ist der Ablauf nach dem Schneiden. Um das geschnittene Material mit wenigen Bearbeitungsschritten in den Folgeprozess einzubinden sind weitere Maschinenkomponenten im Einsatz (Bänder, Hochhalter, Spleißer, etc.). Dafür ist es erforderlich so nah wie möglich mit diesen Komponenten an das Untermesser und in das Maschinengestell zu bauen. Das Material sollte hierzu so wenig wie möglich bewegt werden (u.a. Fallhöhe), um es in geschnittener Ablageposition weiter zu verarbeiten.

Um das Material durch die Schere zu fördern kommt in den meisten Fällen ein Rückzugsystem 59 zum Einsatz. Dabei muss mit einer Greifvorrichtung (Zange) sehr nahe an das Untermesser gefahren werden. Hierzu ist ein gewisser Platzbedarf erforderlich um Kollisionen mit dem Obermesser (bzw. Rundmesser) zu vermeiden. Dadurch ergeben sich unterschiedliche Bauformen der Scheren.

Das Rückzugsystem 59 dient zum Fördern der Materialbahn in die Schneidvorrichtung 57 bzw. zieht das gegriffene Band durch diese, wie zuvor beschrieben. Die Schneidvorrichtung 57 weist ferner ein Transportband auf, das den geschnittenen Cordbandstreifen aufnimmt und ihn aus der Schneidvorrichtung 57 transportiert. Ein solcher Förderer kann als einzelner Bandgurt, in Form mehrerer Bandgurte oder in Form mehrerer Bandgurte mit einer zwischengeschalteten Hochhebeeinrichtung ausgeführt sein.

Der Cordbandstreifen wird sodann auf die erste Fördereinrichtung in Form eines Bandes der erfindungsgemäßen Spleißvorrichtung 1 zum Stumpfspleißen gegeben, und der eigentlichen Spleißeinheit zugeführt. Der Stumpfspleißer 1 dient zum Verbinden (rein mechanisch, ohne Zuhilfenahme von Zusatzstoffen) der zuvor geschnittenen Bandstreifen. Er ist im Winkel verschwenkbar, um das Bandmaterial in verschiedenen Winkeln verarbeiten zu können.

Optional ist noch eine weitere Spleißvorrichtung in Form eines Überlappspleißers 61 gezeigt, der anstelle des Stumpfspleißers 1 verwendet werden kann, wenn diese Spleißart erforderlich ist.

Dem Stumpfspleißer 1 respektive seiner zweiten Fördereinrichtung (bzw. der alternativen Überlappspleißvorrichtung 61) nachgeschaltet ist eine optional vorzusehende Beruhigungsrolle 62. Hierbei handelt es sich lediglich um eine angetriebene Rolle, die das Material, das von der Spleißvorrichtung 1/61 kommt, in die nächste Komponente transportiert. Hierbei erfährt das Material durch den Transport über die Rolle eine Gegenbiegung. Durch die Gegenbiegung zieht sich das Material in Längsrichtung zusammen. Hintergrund ist somit die Dehnung des Materials in Längsrichtung bei der Verarbeitung in der erfindungsgemäßen Spleißvorrichtung 1/61 zu reduzieren. Diese Rolle ist jedoch nicht zwingend vorzusehen. Während des Abtransports wird in der Schneidvorrichtung 57 bereits der nächste Bandstreifen geschnitten.

Gemäß Fig. 14 folgt sodann eine ebenfalls optionale Belegevorrichtung 63. In dieser Station werden auf die erzeugte Materialbahn noch weitere Gummistreifen, ein bis zwölf Stück, aufgelegt. Das Auflegen kann von oben und/oder von unten erfolgen. Des Weiteren werden häufig die Außenkanten der Materialbahn eingefasst, d. h. ein Gummistreifen wird von der Außenkante mit Überstand aufgelegt und um die Gummikante herumgelegt, um die an der Außenkante (= Schnittkante) freiliegenden Cordfäden zu ummanteln.

In jedem Fall vorgesehen ist eine Aufwickelstation 64. In dieser Station werden die erfolgten Materialbahnen wieder mit einer Zwischenlage, die das Verkleben verhindert, auf Spulen gewickelt. Auch hier gibt es verschiedene Ausführungsformen, die von recht einfachen Einfachaufwicklern, in denen das Material manuell abgeschnitten und an einer neuen Rolle aufgewickelt werden muss, bis hin zu vollautomatischen Aufwicklern, in denen für das Materialhandling keinerlei Bedieneingriffe notwendig sind, reichen.

Fig. 15 zeigt ein zweites Layout einer Karkassenanlage, das dem aus Fig. 14 entspricht, das aber im Unterschied zu Fig. 14 einen Slitter 65 aufweist.

Neben der Abwickelstation 56, Schneidvorrichtung 57, Rückzugsystem 59, Transportband und Spleißvorrichtung 1/61 sowie der optionalen Beruhigungsrolle 62 ist hier ein sogenannter Slitter 65 vorgesehen. Hierbei handelt es sich um eine Längsteilvorrichtung, d. h., die in der Spleißvorrichtung 1/61 erzeugte lange Materialbahn wird in zwei Streifen getrennt. Dies dient der Erhöhung der Ausbringung einer Maschine, da bei einer solchen Ausgestaltung ein Scherenschnitt zu zwei fertigen Streifen in den beiden hier vorgesehenen Aufwickelstationen 64 führt. Als Slittermesser finden unter anderem Rundmesser Verwendung.

Dem Slitter 65 sind, optional, zwei Belegevorrichtungen 63 nachgeschaltet, in jedem Fall aber zwei Aufwickelstationen 64.

## Patentansprüche

1. Spleißvorrichtung zum Stumpfspleißen eines klebrigen Bandes, insbesondere eines Stahl- oder Textilcordbandes, mit zwei Spleißbalkenpaaren (4, 5) bestehend jeweils aus einem oberen Spleißbalken (6, 7) und einem unteren Spleißbalken (8, 9), an denen jeweils Spleißleisten in Form von Zahnleisten (10, 11) angeordnet sind, wobei die oberen Spleißbalken (6, 7) über eine erste Antriebseinrichtung (17, 17') vertikal relativ zu den unteren Spleißbalken (8, 9) aus einer angehobenen Nichtarbeitsstellung in eine abgesenkte Spleißstellung bewegbar sind, und wobei ein Spleißbalkenpaar (5) in der Spleißstellung über eine zweite Antriebseinrichtung (32) horizontal relativ zum anderen Spleißbalkenpaar (4) bei gleichzeitigem Eingriff der einander zugewandten Zahnleisten (10, 11) bewegbar ist, **dadurch gekennzeichnet, dass** die erste Antriebseinrichtung pro Spleißbalkenpaar zwei Gewindespindeltriebe (18) mit zugeordneten Servomotoren (23) umfasst, wobei jeder Gewindespindeltrieb (18) eine über den Servomotor (23) angetriebene Gewindespindel (19), die am unteren Spleißbalken (8, 9) drehgelagert ist, und eine auf der Gewindespindel (19) laufende und mit dem oberen Spleißbalken (6, 7) gekoppelte Gewindemutter (20) umfasst, wobei zwischen die Gewindemutter (20) und den Spleißbalken (6, 7) eine den auf das in der Spleißstellung zwischen den oberen und unteren Spleißbalken (6, 7, 8, 9) geklemmte Band wirkenden Spleißdruck begrenzende Kolben-Zylinder-Einheit (24) vorgesehen ist.

2. Spleißvorrichtung nach Anspruch 1, **dadurch gekennzeichnet, dass** die Gewindemutter (20) mit einer Adapterplatte (21) verbunden ist, die mit dem Zylinder (25) der Kolben-Zylinder-Einheit (24) verbunden ist, während der Spleißbalken (6, 7) mit dem Kolben (26) der Kolben-Zylinder-Einheit (24) verbunden ist.

3. Spleißvorrichtung nach Anspruch 1 oder 2, **dadurch gekennzeichnet, dass** die Kolben-Zylinder-Einheit (24) eine Ventileinrichtung aufweist, die bei Erreichen eines aus der Bandklemmung resultierenden Maximaldrucks öffnet.

4. Spleißvorrichtung nach einem der vorangehenden Ansprüche, **dadurch gekennzeichnet, dass** der jeweilige Servomotor (23) am unteren Spleißbalken (8, 9) in axialer Verlängerung der Gewindespindel (19) angeordnet ist.

5. Spleißvorrichtung nach einem der vorangehenden Ansprüche, **dadurch gekennzeichnet, dass** an einem Spleißbalken jedes Spleißbalkenpaares (4, 5) eine über einen Antriebsmotor (28), insbesondere einen Servoantrieb vertikal in Richtung des anderen Spleißbalkens des jeweiligen Spleißbalkenpaares (4, 5) verstellbare Anschlagstange (27) für den anderen Spleißbalken vorgesehen ist.

6. Spleißvorrichtung nach Anspruch 5, **dadurch gekennzeichnet, dass** die Anschlagstangen (27) an einem Ende der Spleißbalken (8, 9) vorgesehen sind.

7. Spleißvorrichtung nach einem der vorangehenden Ansprüche, **dadurch gekennzeichnet, dass** der obere Spleißbalken (6, 7) jedes Spleißbalkenpaares (4, 5) über eine Stangenführung (30, 31) umfassend eine am einen Spleißbalken vorgesehene Stange (30), die in eine am anderen Spleißbalken vorgesehene Führungsbohrung (31) greift, vertikal relativ zum unteren Spleißbalken (8, 9) geführt ist.

8. Spleißvorrichtung nach einem der vorangehenden Ansprüche, **dadurch gekennzeichnet, dass** der untere Spleißbalken (9) des horizontal bewegbaren Spleißbalkenpaares (5) über wenigstens zwei Linearführungen (37) an einem Vorrichtungsgestell, insbesondere an einer Grundplattes des Vorrichtungsgestells geführt ist.

9. Spleißvorrichtung nach Anspruch 8, **dadurch gekennzeichnet, dass** die zweite Antriebseinrichtung (32) zwei die beiden unteren Spleißbalken (8, 9) verbindende Gewindespindeltriebe (33), umfassend eine Gewindespindel (35) und eine Gewindemutter (34), mit zugeordneter Antriebsvorrichtung (39) umfasst.

10. Spleißvorrichtung nach Anspruch 9, **dadurch gekennzeichnet, dass** die drehgelagertejeweilige Gewindespindel (35) an dem horizontal zu bewegenden unteren Spleißbalken (8) befestigt ist und sich zum anderen positionsfesten unteren Spleißbalken (9) erstreckt, an dem die jeweilige auf der Gewindespindel (35) laufende Gewindemutter (34) befestigt ist, die über die Antriebsvorrichtung (32) angetrieben wird.

11. Spleißvorrichtung nach Anspruch 9, **dadurch gekennzeichnet, dass** die jeweilige Gewindespindel am positionsfesten unteren Spleißbalken drehgelagert ist und sich zum anderen horizontal zu bewegenden Spleißbalken erstreckt, an dem die jeweilige auf der Gewindespindel laufende Gewindemutter befestigt ist, wobei die Gewindespindel über die Antriebsvorrichtung angetrieben wird.

12. Spleißvorrichtung nach einem der Ansprüche 10 oder 11, **dadurch gekennzeichnet, dass** die Antriebsvorrichtung (32) einen umlaufenden Zahnriemen (37), der die angetriebenen Gewindemuttern (34) oder die angetriebenen Gewindespindeln umschlingt, und der über einen Antriebsmotor (38) mit zugeordnetem Antriebszahnrad (39) angetrieben wird, umfasst.

13. Spleißvorrichtung nach einem der vorangehenden Ansprüche, **dadurch gekennzeichnet, dass** am, in Bandförderrichtung gesehen hinteren oberen Spleißbalken (7) ein oder mehrere längs des Spleißbalkens (7) verlaufende Niederhalter (47), die über ein oder mehrere Stellelemente (52) vertikal bewegbar sind, an einem horizontal verschiebbar gelagerten Träger (48) vorgesehen sind, und dass am unteren Spleißbalken (9) ein das Ende des bereits gespleißten Bands tragendes, horizontal verschiebbares Auflageblech (45) vorgesehen ist, das mit dem Träger (48) über eine Verbindungseinrichtung (50), die eine Vertikalbewegung des oberen Spleißbalkens (7) erlaubt, verbunden ist, wobei das Auflageblech (45) mit einem eine Horizontalverschiebung erwirkenden Stellelement (46) gekoppelt ist.

14. Spleißvorrichtung nach Anspruch 13, **dadurch gekennzeichnet, dass** die Verbindungseinrichtung (50) eine am Auflageblech (45) befestigte Stange (51) ist, die in einer am Träger (48) vorgesehenen Stangenführung geführt ist.

15. Spleißvorrichtung nach einem der vorangehende Ansprüche, **dadurch gekennzeichnet, dass** an jedem Spleißbalken (6, 7, 8, 9) eine über ein oder mehrere Stellelemente (43, 44) vertikal bewegbare Abstreiferleiste (41, 42) vorgesehen ist, mit der nach dem Spleißen während des Hochfahrens der oberen Spleißbalken (6, 7) das am jeweiligen Spleißbalken gegebenenfalls anhaftende gespleißte Band abstreifbar ist.

## Claims

1. Splicing device for the butt splicing of an tacky band, in particular a band of steel cord or textile cord, comprising two pairs of splicing bars (4, 5) each consisting of an upper splicing bar (6, 7) and a lower splicing bar (8, 9), arranged on each of which are splicing strips in the form of serrated strips (10, 11), wherein the upper splicing bars (6, 7) can be moved by means of a first driving mechanism (17, 17') vertically in relation to the lower splicing bars (8, 9) from a raised idle position into a lowered splicing position, and wherein, in the splicing position, one pair of splicing bars (5) can be moved by means of a second driving mechanism (32) horizontally in relation to the other pair of splicing bars (4) while at the same time the serrated strips (10, 11) facing one another engage, **characterized in that** the first driving mechanism comprises for each pair of splicing bars two threaded spindle drives (18) with assigned servomotors (23), wherein each threaded spindle drive (18) comprises a threaded spindle (19), which is driven by means of the servomotor (23) and rotatably mounted on the lower splicing bar (8, 9), and a threaded nut (20), which runs on the threaded spindle (19) and is coupled to the upper splicing bar (6, 7), wherein between the threaded nut (20) and the splicing bars (6, 7) there is provided a piston-cylinder unit (24), which limits the splicing pressure acting on the band clamped between the upper and lower splicing bars (6, 7, 8, 9) in the splicing position.

2. Splicing device according to Claim 1, **characterized in that** the threaded nut (20) is connected to an adapter plate (21), which is connected to the cylinder (25) of the piston-cylinder unit (24), while the splicing bar (6, 7) is connected to the piston (26) of the piston-cylinder unit (24).

3. Splicing device according to Claim 1 or 2, **characterized in that** the piston-cylinder unit (24) has a valve device, which opens when a maximum pressure resulting from the clamping of the band is reached.

4. Splicing device according to one of the preceding claims, **characterized in that** the respective servomotor (23) is arranged on the lower splicing bar (8, 9) in axial extension of the threaded spindle (19).

5. Splicing device according to one of the preceding claims, **characterized in that** on one splicing bar of each pair of splicing bars (4, 5) there is provided a stop rod (27) for the other splicing bar, which stop rod can be adjusted by means of a drive motor (28), in particular a servodrive, vertically in the direction of the other splicing bar of the respective pair of splicing bars (4, 5).

6. Splicing device according to Claim 5, **characterized in that** the stop rods (27) are provided at one end of the splicing bars (8, 9).

7. Splicing device according to one of the preceding claims, **characterized in that** the upper splicing bar (6, 7) of each pair of splicing bars (4, 5) is guided vertically in relation to the lower splicing bar (8, 9) by means of a rod guide (30, 31), comprising a rod (30), which is provided on a splicing bar and reaches into a guiding bore (31) provided on the other splicing bar.

8. Splicing device according to one of the preceding claims, **characterized in that** the lower splicing bar (9) of the horizontally movable pair of splicing bars (5) is guided on a device frame, in particular on a baseplate of the device frame, by means of at least two linear guides (37).

9. Splicing device according to Claim 8, **characterized in that** the second driving mechanism (32) comprises two threaded spindle drives (33), connecting the two lower splicing bars (8, 9) and comprising a threaded spindle (35) and a threaded nut (34), with an assigned driving device (39).

10. Splicing device according to Claim 9, **characterized in that** the rotatably mounted respective threaded spindle (35) is secured on the lower, horizontally movable splicing bar (8) and extends to the other, positionally fixed lower splicing bar (9), secured on which is the respective threaded nut (34), running on the threaded spindle (35), that is driven by means of the drive device (32).

11. Splicing device according to Claim 9, **characterized in that** the respective threaded spindle is rotatably mounted on the positionally fixed lower splicing bar and extends to the other, horizontally movable splicing bar, secured on which is the respective threaded nut running on the threaded spindle, wherein the threaded spindle is driven by means of the drive device.

12. Splicing device according to either of Claims 10 and 11, **characterized in that** the drive device (32) comprises a running-around toothed belt (37), which wraps around the driven threaded nuts (34) or the driven threaded spindles, and which is driven by means of a drive motor (38) with an assigned driving gearwheel (39).

13. Splicing device according to one of the preceding claims, **characterized in that**, on the upper splicing bar (7) at the rear when seen in the band conveying direction, one or more holding-down devices (47) that run along the splicing bar (7) and can be moved vertically by means of one or more actuating elements (52) are provided on a horizontally displaceably mounted carrier (48), and **in that**, on the lower splicing bar (9), a horizontally displaceable supporting plate (45) is provided, which supports the end of the already spliced band and is connected to the carrier (48) by means of a connecting device (50), which allows a vertical movement of the upper splicing bar (7), wherein the supporting plate (45) is coupled to an actuating element (46) that brings about a horizontal displacement.

14. Splicing device according to Claim 13, **characterized in that** the connecting device (50) is a rod (51) that is secured on the supporting plate (45) and is guided in a rod guide provided on the carrier (48).

15. Splicing device according to one of the preceding claims, **characterized in that**, on each splicing bar (6, 7, 8, 9), a stripper strip (41, 42) is provided, which can be moved vertically by means of one or more actuating elements (43, 44) and with which the spliced band that is possibly adhesively attached to the respective splicing bar after the splicing can be stripped off during the moving up of the upper splicing bars (6, 7).

## Revendications

1. Dispositif d'épissurage pour l'épissurage bout-à-bout d'une bande adhésive, en particulier d'une bande de câble d'acier ou de câble textile, comprenant deux paires de barres d'épissurage (4, 5) constituées chacune d'une barre d'épissurage supérieure (6, 7) et d'une barre d'épissurage inférieure (8, 9), au niveau desquelles sont à chaque fois disposées des baguettes d'épissurage en forme de baguettes dentées (10, 11), les barres d'épissurage supérieures (6, 7) pouvant être déplacées par le biais d'un premier dispositif d'entraînement (17, 17') verticalement par rapport aux barres d'épissurage inférieures (8, 9) d'une position de non fonctionnement soulevée dans une position d'épissurage abaissée, et une paire de barres d'épissurage (5), dans la position d'épissurage, pouvant être déplacée par le biais d'un deuxième dispositif d'entraînement (32) horizontalement par rapport à l'autre paire de barres d'épissurage (4) lors d'un engagement simultané des baguettes dentées tournées l'une vers l'autre (10, 11), **caractérisé en ce que** le premier dispositif d'entraînement comprend, pour chaque paire de barres d'épissurage, deux entraînements à broche filetée (18) avec des servomoteurs associés (23), chaque entraînement à broche filetée (18) comprenant une broche filetée (19) entraînée par le biais du servomoteur (23), qui est supportée à rotation sur la barre d'épissurage inférieure (8, 9) et un écrou fileté (20) tournant sur la broche filetée (19) et accouplé à la barre d'épissurage supérieure (6, 7), une unité cylindre-piston (24) limitant la pression d'épissurage agissant sur la bande serrée dans la position d'épissurage entre la barre d'épissurage supérieure et la barre d'épissurage inférieure (6, 7, 8, 9) étant prévue entre l'écrou fileté (20) et la barre d'épissurage (6, 7).

2. Dispositif d'épissurage selon la revendication 1, **caractérisé en ce que** l'écrou fileté (20) est connecté à une plaque d'adaptateur (21) qui est connectée au cylindre (25) de l'unité cylindre-piston (24) tandis que la barre d'épissurage (6, 7) est connectée au piston (26) de l'unité cylindre-piston (24).

3. Dispositif d'épissurage selon la revendication 1 ou 2, **caractérisé en ce que** l'unité cylindre-piston (24) présente un dispositif de soupape qui s'ouvre à l'obtention d'une pression maximale résultant du serrage de la bande.

4. Dispositif d'épissurage selon l'une quelconque des revendications précédentes, **caractérisé en ce que** le servomoteur respectif (23) est disposé au niveau de la poutre d'épissurage inférieure (8, 9) dans le prolongement axial de la broche filetée (19).

5. Dispositif d'épissurage selon l'une quelconque des revendications précédentes, **caractérisé en ce qu'**au niveau d'une barre d'épissurage de chaque paire de barres d'épissurage (4, 5) est prévue une tige de butée (27) pour l'autre barre d'épissurage, pouvant être déplacée verticalement par le biais d'un moteur d'entraînement (28), en particulier d'un entraînement servocommandé, dans la direction de l'autre barre d'épissurage de la paire de barres d'épissurage respectives (4, 5).

6. Dispositif d'épissurage selon la revendication 5, **caractérisé en ce que** les tiges de butée (27) sont prévues à une extrémité des barres d'épissurage (8, 9).

7. Dispositif d'épissurage selon l'une quelconque des revendications précédentes, **caractérisé en ce que** la barre d'épissurage supérieure (6, 7) de chaque paire de barres d'épissurage (4, 5) est guidée verticalement par rapport à la barre d'épissurage inférieure (8, 9) par le biais d'un guidage à tige (30, 31) comprenant une tige (30) prévue au niveau d'une barre d'épissurage, qui vient en prise dans un trou de guidage (31) prévu au niveau de l'autre barre d'épissurage.

8. Dispositif d'épissurage selon l'une quelconque des revendications précédentes, **caractérisé en ce que** la barre d'épissurage inférieure (9) de la paire de barres d'épissurage déplaçables horizontalement (5) est guidée par le biais d'au moins deux guides linéaires (37) sur un bâti du dispositif, en particulier sur une plaque de base du bâti du dispositif.

9. Dispositif d'épissurage selon la revendication 8, **caractérisé en ce que** le deuxième dispositif d'entraînement (32) comprend deux entraînements à broche filetée (33) reliant les deux barres d'épissurage inférieures (8, 9), comprenant une broche filetée (35) et un écrou de broche (34), avec un dispositif d'entraînement associé (39).

10. Dispositif d'épissurage selon la revendication 9, **caractérisé en ce que** la broche filetée respective supportée à rotation (35) est fixée à la barre d'épissurage inférieure (8) devant être déplacée horizontalement et s'étend jusqu'à l'autre barre d'épissurage inférieure (9) fixée en position, sur laquelle est fixé l'écrou fileté respectif (34) tournant sur la broche filetée (35), qui est entraîné par le biais du dispositif d'entraînement (32).

11. Dispositif d'épissurage selon la revendication 9, **caractérisé en ce que** la broche filetée respective est supportée à rotation au niveau de la barre d'épissurage inférieure fixée en position, et s'étend vers l'autre barre d'épissurage devant être déplacée horizontalement, sur laquelle est fixé l'écrou fileté respectif tournant sur la broche filetée, la broche filetée étant entraînée par le biais du dispositif d'entraînement.

12. Dispositif d'épissurage selon l'une quelconque des revendications 10 ou 11, **caractérisé en ce que** le dispositif d'entraînement (32) comprend une courroie dentée en circulation (37) qui entoure les écrous filetés entraînés (34) ou les broches filetées entraînées, et qui est entraînée par le biais d'un moteur d'entraînement (38) avec une roue dentée d'entraînement associée (39).

13. Dispositif d'épissurage selon l'une quelconque des revendications précédentes, **caractérisé en ce qu'**au niveau de la barre d'épissurage (7) supérieure arrière, vu dans la direction de transport de la bande, un ou plusieurs dispositifs de maintien (47) s'étendant le long de la barre d'épissurage (7), qui peuvent être déplacés verticalement par le biais d'un ou de plusieurs éléments de réglage (52), sont prévus sur un support (48) supporté de manière déplaçable horizontalement, et **en ce qu'**au niveau de la barre d'épissurage inférieure (9) est prévue une tôle d'appui (45) déplaçable horizontalement, supportant l'extrémité de la bande déjà épissurée, qui est connectée au support (48) par le biais d'un dispositif de connexion (50) qui permet un déplacement vertical de la barre d'épissurage supérieure (7), la tôle d'appui (45) étant accouplée à un élément de réglage (46) générant un déplacement horizontal.

14. Dispositif d'épissurage selon la revendication 13, **caractérisé en ce que** le dispositif de connexion (50) est une tige (51) fixée à la tôle d'appui (45), qui est guidée dans un guide de tige prévu sur le support (48).

15. Dispositif d'épissurage selon l'une quelconque des revendications précédentes, **caractérisé en ce qu'**au niveau de chaque barre d'épissurage (6, 7, 8, 9) est prévue une baguette de raclage (41, 42) déplaçable verticalement par le biais d'un ou de plusieurs éléments de réglage (43, 44), au moyen de laquelle, après l'épissurage, pendant le déplacement vers le haut de la barre d'épissurage supérieure (6, 7), la bande épissurée adhérant éventuellement à la barre d'épissurage respective peut être râclée.
